# EUROPÄISCHE PATENTSCHRIFT

(11) **EP 3 805 024 B1**
(45) Veröffentlichungstag und Bekanntmachung des Hinweises auf die Patenterteilung: **29.06.2022**
(21) Anmeldenummer: 20194747.0
(22) Anmeldetag: 07.09.2020
(51) Int. Cl.: B60H 1/22

(54) **HEIZGERÄTETRÄGERANORDNUNG**
HEATING DEVICE SUPPORT ASSEMBLY
AGENCEMENT DU SUPPORT D'APPAREIL CHAUFFANT

(30) Priorität: 09.10.2019 DE 102019127093
(43) Veröffentlichungstag der Anmeldung: 14.04.2021
(73) Patentinhaber: Eberspächer Climate Control Systems GmbH, 73730 Esslingen (DE)
(72) Erfinder: Findeis, Thorsten, 73095 Albershausen (DE); Heybach, Dieter, 73269 Hochdorf (DE); Wecker, Robert, 73249 Wernau (DE)
(74) Vertreter: Ruttensperger Lachnit Trossin Gomoll

(56) Entgegenhaltungen:
- DE-A1-102010 030 033
- DE-U1- 29 501 064
- JP-A- H01 306 316
- JP-A- 2006 131 015
- JP-A- 2010 228 633

## Beschreibung

Die vorliegende Erfindung betrifft eine Heizgeräteträgeranordnung, vermittels welcher ein Fahrzeugheizgerät an einem Fahrzeug stabil montiert werden kann.

Eine Heizgeräteträgeranordnung gemäß dem Oberbegriff des Anspruchs 1 ist aus der DE 295 01 064 U1 bekannt. Eine an einem Fahrzeug festzulegende Trägerstruktur der Heizgeräteträgeranordnung umfasst ein federelastisch verformbares Trägergehäuse, das eine im Wesentlichen U-förmige Struktur mit zwei einander gegenüberliegenden Träger-Gehäusewänden umfasst. Zur Anbringung an einem Fahrzeug wird ein Heizgerät zwischen die einander gegenüberliegenden Träger-Gehäusewände eingeschoben. In jeder Träger-Gehäusewand sind zwei Rastöffnungen ausgebildet, in welche an dem Heizgerät vorgesehene Rastrampen bei Herstellung des Zusammenbauzustands unter elastischer Verformung des Trägergehäuses einrasten und im Einrastzustand das Heizgerät am Trägergehäuse halten.

Die DE 10 2010 030 033 A1 offenbart eine Heizgeräteträgeranordnung mit einem an einem Fahrzeug festzulegenden plattenartigen Träger. In dem Träger ist eine schlüssellochartig geformte Kopplungsaussparung vorgesehen, in welche bei Herstellung eines Kopplungszustandes ein am Heizgerät angeordneter Kopplungsvorsprung eingreifend positioniert wird.

Die JP H01 306316A, JP 2006 131015 A und JP 2010 228633 A offenbaren jeweils Heizgeräteträgeranordnungen, bei welchen eine jeweilige Trägerstruktur mit einem Fahrzeug und einem Heizgerät durch Verschraubung zu verbindende Trägerteile umfasst, welche miteinander auch durch Verschraubung zu verbinden sind.

Aus der DE 10 2013 201 988 A1 ist ein Träger für ein an einem Fahrzeug anzubringendes Heizgerät bekannt, welcher plattenartig ausgebildet ist und durch Verschraubung an einem Fahrzeug anzubringen ist. Das Heizgerät wird an dem Träger durch Verhakung bzw. Verschraubung festgelegt.

Die DE 10 2017 114 762 A1 offenbart einen modulartigen Träger für ein an einem Fahrzeug anzubringendes Heizgerät mit zwei jeweils mit einer Mehrzahl von Rohrbereichen aufgebauten und ein Heizgerät zwischen sich aufnehmenden Modulteilen.

Es ist die Aufgabe der vorliegenden Erfindung, eine Heizgeräteträgeranordnung zur Anbringung eines Fahrzeugheizgeräts an einem Fahrzeug vorzusehen, vermittels welcher ein Heizgerät leicht, gleichwohl aber zuverlässig an ein Fahrzeug montiert und von einem Fahrzeug demontiert werden kann.

Erfindungsgemäß wird diese Aufgabe gelöst durch eine Heizgeräteträgeranordnung zur Anbringung eines Heizgeräts an einem Fahrzeug gemäß Anspruch 1. Diese Heizgeräteträgeranordnung umfasst:
- eine an einem Fahrzeug anzubringende Trägerstruktur,
- wenigstens ein an einem Heizgerät anzubringendes Trägerelement,
wobei an der Trägerstruktur in Zuordnung zu jedem an dem Heizgerät anzubringenden Trägerelement eine Trägerelementen-Aufnahme zur Aufnahme eines an dem Heizgerät angebrachten Trägerelements vorgesehen ist, und wobei Fixiermittel vorgesehen sind zur Fixierung jedes in einer Trägerelementen-Aufnahme aufgenommenen Trägerelements bezüglich der Trägerstruktur.

Die Trägerstruktur umfasst ein Trägergehäuse mit zwei einander gegenüberliegenden Träger-Gehäusewänden, wobei an jeder der Träger-Gehäusewände eine Trägerelementen-Aufnahme vorgesehen ist.

Die erfindungsgemäß aufgebaute Heizgeräteträgeranordnung umfasst einerseits einen fahrzeugfest vorzusehenden Systembereich, nämlich die Trägerstruktur, welche hinsichtlich der zur Anbindung an ein Fahrzeug vorzusehenden baulichen Maßnahmen im Wesentlichen unabhängig vom Aufbau des in einem Fahrzeug anzubringenden Heizgeräts ausgestaltet werden kann. Andererseits umfasst die Heizgeräteanordnung einen an einem Heizgerät vorzusehenden Systembereich, nämlich das bzw. mehrere Trägerelemente, die hinsichtlich der zur Anbindung an das Heizgerät vorzusehenden baulichen Maßnahmen frei ausgestaltet werden können. Durch Herstellung der Aufnahmewechselwirkung zwischen einem bzw. mehreren Trägerelementen und der Trägerstruktur und durch die Fixierwirkung der Fixiermittel wird eine einfach herzustellende und auch zu lösende Anbringung des Heizgeräts an einem Fahrzeug ermöglicht.

Dabei kann die Aufnahmewechselwirkung einfach, gleichwohl aber stabil sichergestellt werden, wenn wenigstens eine, vorzugsweise jede in Zuordnung zu einem an dem Heizgerät angebrachten Trägerelement vorgesehene Trägerelementen-Aufnahme eine Schiebeaufnahme zum Einschieben des in dieser Trägerelementen-Aufnahme aufzunehmenden Trägerelements in einer Einschieberichtung umfasst.

Für eine stabile Haltewechselwirkung zwischen der Trägerstruktur und dem bzw. den Trägerelementen wird vorgeschlagen, dass die Schiebeaufnahme an zwei quer zur Einschieberichtung einander gegenüberliegenden Schiebeaufnahme-Randbereichen Hinterschneidungsbereiche umfasst, und dass das in der Schiebeaufnahme aufzunehmende Trägerelement in Zuordnung zu jedem Hinterschneidungsbereich einen Hinterschneidungs-Eingriffsbereich umfasst, wobei bei in die Schiebeaufnahme eingeschobenem Trägerelement jeder Hinterschneidungs-Eingriffsbereich von einem zugeordneten Hinterschneidungsbereich übergriffen ist.

Eine stabile und auch leicht lösbare Verbindung zwischen der Trägerstruktur und dem bzw. den Trägerelementen kann beispielsweise dadurch erreicht werden, dass die Fixiermittel Rastmittel umfassen.

Dabei können die Trägerstruktur und das bzw. die Trägerelemente derart aufeinander abgestimmt sein, dass bei Einschieben des Trägerelements in die Schiebeaufnahme in der Einschieberichtung die Rastmittel bei Erreichen einer Rast-Einschiebeposition des Trägerelements bezüglich der Trägerstruktur in einen Verrastungszustand kommen.

Zur Herstellung der Rastwirkung können die Rastmittel an jedem in einer Trägerelementen-Aufnahme der Trägerstruktur aufzunehmenden Trägerelement oder an der Raststruktur wenigstens einen, vorzugsweise eine Mehrzahl von Rastvorsprüngen umfassen und können an der Trägerstruktur oder jedem in einer Trägerelementen-Aufnahme der Trägerstruktur aufzunehmenden Trägerelement in Zuordnung zu jedem Rastvorsprung eine Rastaufnahme umfassen.

Bei einer baulich einfach zu realisierenden Ausgestaltung kann der wenigstens eine Rastvorsprung am Trägerelement vorgesehen sein, und die in Zuordnung zu dem wenigstens einen Rastvorsprung vorgesehene Rastaufnahme kann an der Trägerstruktur vorgesehen sein.

Um zum Lösen der Rastverbindung leichten Zugriff auf die Rastmittel erlangen zu können, wird vorgeschlagen, dass die in Zuordnung zu dem wenigstens einen Rastvorsprung vorgesehene Rastaufnahme an der Trägerstruktur im Bereich eines Einführöffnungsbereichs der Schiebeaufnahme vorgesehen ist.

Eine stabile Rastwirkung kann beispielsweise dadurch unterstützt werden, dass an wenigstens einem, vorzugsweise jedem Trägerelement eine Mehrzahl von Rastvorsprüngen mit gegenseitigem Abstand quer zur Einschieberichtung vorgesehen ist.

Für einen kostengünstigen, gleichwohl jedoch stabilen Aufbau wird vorgeschlagen, dass das Trägergehäuse aus Kunststoffmaterial aufgebaut ist.

Wenigstens ein, vorzugsweise jedes Trägerelement kann wenigstens einen Anbringungsbereich zur Anbringung des Trägerelements an einem Heizgerät umfassen. Ferner kann wenigstens ein, vorzugsweise jedes Trägerelement plattenartig ausgebildet sein. Ein stabiler, gleichwohl kostengünstig herzustellender Aufbau kann dadurch unterstützt werden, dass wenigstens ein, vorzugsweise jedes Trägerelement aus Kunststoffmaterial aufgebaut ist.

Zur einfach herzustellenden, stabil wirkenden Anbindung eines Trägerelements an ein Heizgerät wird vorgeschlagen, dass wenigstens ein, vorzugsweise jeder Anbringungsbereich einen in einer Anbringungsöffnung am Heizgerät aufzunehmenden Anbringungszapfen umfasst.

Die Erfindung betrifft ferner eine Heizgerätebaugruppe, umfassend ein Heizgerät und eine erfindungsgemäß aufgebaute Heizgeräteträgeranordnung.

Um ein Heizgerät stabil zwischen den beiden Träger-Gehäusewänden der Trägerstruktur positionieren zu können, kann an jeder einer der Träger-Gehäusewände gegenüberliegend zu positionierenden Seite des Heizgeräts ein Trägerelement angebracht sein.

Die vorliegende Erfindung wird nachfolgend mit Bezug auf die beiliegenden Figuren detailliert beschrieben. Es zeigt:
- Fig. 1: eine Draufsicht auf ein Fahrzeugheizgerät mit zwei daran anzubringenden plattenartigen Trägerelementen einer Heizgeräteträgeranordnung;
- Fig. 2: eine Trägerstruktur der Heizgeräteträgeranordnung mit dem an der Trägerstruktur aufzunehmenden und zwei plattenartige Trägerelemente tragenden Heizgerät.

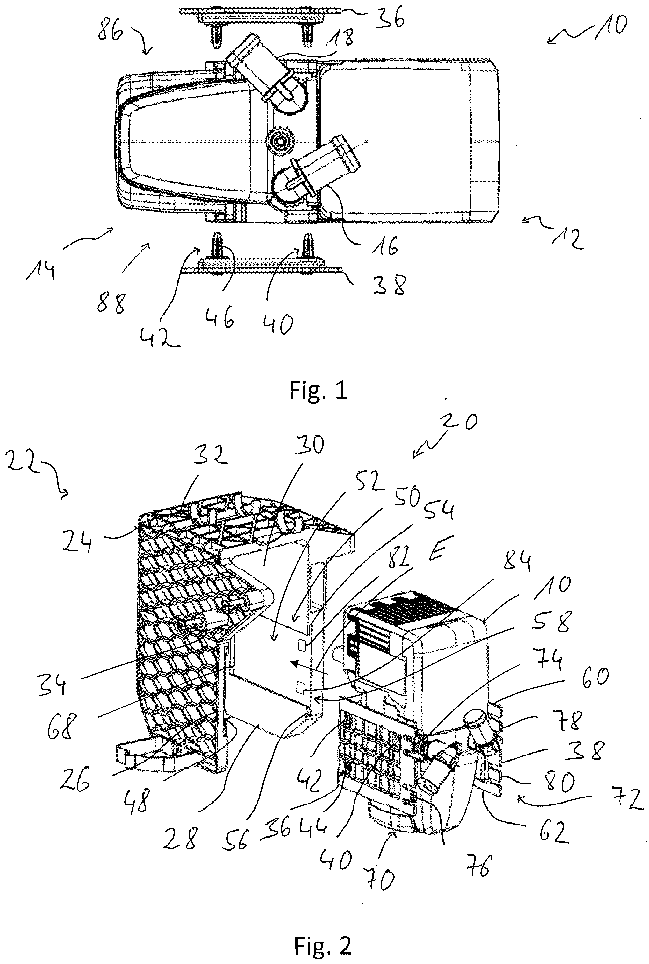

Die Fig. 1 und 2 zeigen ein herkömmlich aufgebautes brennstoffbetriebenes Heizgerät 10, welches in einem Fahrzeug als Standheizung oder als Zuheizer eingesetzt werden kann. Das Heizgerät 10 umfasst einen Brennerbereich 12, in welchem eine mit Brennstoff und Verbrennungsluft gespeiste Brennkammerbaugruppe untergebracht ist. Im Verbrennungsbetrieb entstehen in einer Brennkammer der Brennkammerbaugruppe Verbrennungsabgase, welche Wärme transportieren. In einem Wärmetauscherbereich 14 wird diese Wärme auf ein zu erwärmendes Medium, im dargestellten Beispiel ein flüssiges Wärmeträgermedium, übertragen. Dieses wird über zwei Verbindungsstutzen 16, 18 in einen Wärmeträgermediumströmungsraum des Wärmetauscherbereichs 14 eingespeist bzw. aus diesem abgezogen.

Um das Heizgerät 10 stabil an einem Fahrzeug anbringen zu können, ist eine allgemein mit 20 bezeichnete Heizgeräteträgeranordnung vorgesehen. Die Heizgeräteträgeranordnung 20 umfasst eine fahrzeugfest zu montierende Trägerstruktur 22, welche als Trägergehäuse 24 ausgebildet ist. Das Trägergehäuse 24 umfasst zwei mit Abstand einander gegenüberliegend positionierte Träger-Gehäusewände 26, 28, welche zwischen sich einen Aufnahmeraum 30 für das an der Trägerstruktur 22 zu tragende Heizgerät 10 bilden.

Das Trägergehäuse 24 ist vorzugsweise aus Kunststoffmaterial aufgebaut. Um bei geringem Gewicht und geringem Materialeinsatz eine stabile Struktur zu erhalten, ist dieses insbesondere im Bereich seiner Träger-Gehäusewände 26, 28 und beispielsweise auch im Bereich von die beiden Träger-Gehäusewände 26, 28 miteinander verbindenden Wänden 32 mit einer beispielsweise wabenartigen Versteifungsstruktur ausgebildet. Zur festen Anbindung der Trägerstruktur 22 bzw. des Trägergehäuses 24 an ein Fahrzeug kann das Trägergehäuse 24 mit verschiedenen Formationen, beispielsweise mehreren in Fig. 2 erkennbaren Montagezapfen 34, ausgebildet sein. Alternativ oder zusätzlich kann eine Anbindung an ein Fahrzeug durch Verschraubung oder andere Befestigungsmittel erfolgen.

Die Heizgeräteträgeranordnung 20 umfasst im dargestellten Ausgestaltungsbeispiel zwei am Heizgerät 10 anzubringende, plattenartige Trägerelemente 36, 38. Auch die Trägerelemente 36, 38 sind vorzugsweise aus Kunststoffmaterial aufgebaut und zum Erreichen der gewünschten Stabilität bei geringem Materialeinsatz mit einer beispielsweise rippenartigen Versteifungsstruktur versehen. Zur Anbringung am Heizgerät 10 umfasst jedes Trägerelement 36, 38 eine Mehrzahl von Anbringungsbereichen 40, 42, 44. Jeder dieser Anbringungsbereiche 40, 42, 44 kann einen an dem Trägerelement 36 bzw. 38 als integraler Bestandteil ausgebildeten Anbringungszapfen 46 umfassen, der in einer zugeordneten Anbringungsöffnung am Heizgerät 10 durch Einstecken aufgenommen und darin z.B. durch Reibschluss gehaltenwerden kann.

In Zuordnung zu jedem der beiden Trägerelemente 36, 38 ist an der Trägerstruktur 22 eine Trägerelement-Aufnahme 48, 50 vorgesehen. Dabei ist die Trägerelement-Aufnahme 48 in der Träger-Gehäusewand 26 zur Aufnahme des Trägerelements 36 vorgesehen, während die Trägerelement-Aufnahme 50 in der Träger-Gehäusewand 28 zur Aufnahme des Trägerelements 38 vorgesehen ist.

Jede Trägerelement-Aufnahme 48, 40 ist als Schiebeaufnahme 52 ausgebildet, in welcher das jeweils zugeordnete Trägerelement 36 bzw. 38 durch Einschieben in einer Einschieberichtung E aufgenommen werden kann. Wie in Fig. 2 anhand der Trägerelement-Aufnahme 50 erkennbar, weist jede als Schiebeaufnahme 52 ausgebildete Trägerelement-Aufnahme 48, 50 in Schiebeaufnahme-Randbereichen quer zur Einschieberichtung E in Abstand zueinander angeordnete Hinterschneidungsbereiche 54, 56 auf, welche in der Einschieberichtung E langgestreckt und an einem Einführöffnungsbereich 58 der jeweiligen Schiebeaufnahme 52 zur Aufnahme eines jeweiligen am zugeordneten Trägerelement 36, 38 ausgebildeten Hinterschneidungs-Eingriffsbereichs 60, 62 offen sind.

Zum Anbringen des mit den beiden Trägerelementen 36, 38 ausgestatteten Heizgeräts 10 an der Trägerstruktur 12 wird das Heizgerät 10 in der Einschieberichtung E in den zwischen den beiden Träger-Gehäusewänden 26, 28 gebildeten Aufnahmeraum 30 eingeführt, wobei die beiden Trägerelemente 36, 38 in die diesen jeweils zugeordneten Trägerelement-Aufnahmen 48, 50 eingeschoben werden. Dabei treten die an den beiden Trägerelementen 36, 38 vorgesehenen Hinterschneidungs-Eingriffsbereiche 60, 62 in die Hinterschneidungsbereiche 54, 56 der jeweils zugeordneten Schiebeaufnahme 52 ein, so dass die Trägerelemente 36, 38 bei Bewegung in der Einschieberichtung E in den Trägerelement-Aufnahmen 48, 50 geführt werden. Diese Einschiebebewegung kann fortgeführt werden, bis die Trägerelemente 36, 38 an einer die jeweilige Schiebeaufnahme 52 beendenden Stirnwand 68 zur Anlage kommen und somit eine Einschiebeposition erreichen.

Um in der Einschiebeposition das Heizgerät 10 stabil bezüglich der Trägerstruktur 22 zu fixieren, sind allgemein mit 70 bezeichnete Fixiermittel vorgesehen. Diese sind als Rastmittel 72 ausgebildet und umfassen an jedem der Trägerelemente 36 zwei quer zur Einschieberichtung E mit Abstand zueinander angeordnete Rastvorsprünge 74, 76. Jeder der Rastvorsprünge 74, 76 kann an einer im Wesentlichen entgegengesetzt zur Einschieberichtung E sich erstreckenden Rastlasche 78, 80 des jeweiligen Trägerelements 36, 38 vorgesehen sein und in Richtung vom Heizgerät 10 weg bzw. auf die jeweils zugeordnete Träger-Gehäusewand 26, 28 zu hervorstehend ausgebildet sein.

An jeder der Träger-Gehäusewände 26, 28 bzw. der darin vorgesehenen Schiebeaufnahmen 52 ist in Zuordnung zu jedem der Rastvorsprünge 74, 76 eine Rastaufnahme 82, 84 ausgebildet. Beim Bewegen des Heizgeräts 10 in Richtung zur Einschiebeposition werden zunächst die an den Trägerelementen 36, 38 vorgesehenen Rastlaschen 78, 80 durch Anlagewechselwirkung der Rastvorsprünge 74, 76 an den Träger-Gehäusewänden 26, 28 aus ihrer Ruheposition ausgelenkt, bis die Rastvorsprünge 74, 76 in den Bereich der Rastaufnahmen 82, 84 gelangen. Bei Erreichen der Rastaufnahmen 82, 84 federn die Rastlaschen 78, 80 in ihre Ruhestellung zurück, wobei die Rastvorsprünge 74, 76 in die diesen jeweils zugeordneten Rastaufnahmen 82, 84 eintreten und somit ein Bewegen der Trägerelemente 36, 38 entgegen der Einschieberichtung E durch Formschluss verhindern. Dabei kann die Positionierung der Rastvorsprünge 74, 76 bzw. der Rastaufnahmen 82, 84 derart auf die Positionierung der Stirnwand 68 abgestimmt sein, dass bei in die Rastaufnahmen 82, 84 eingreifenden Rastvorsprüngen 74, 76 durch die so erzeugte Rastwirkung die Trägerelemente 36, 38 stabil in Anlage an der jeweils zugeordneten Stirnwand 68 gehalten werden, so dass eine in der Einschieberichtung E im Wesentlichen spielfreie Halterung der Trägerelemente 36, 38 bezüglich der Trägerstruktur 22 gewährleistet ist.

Zum Demontieren des Heizgeräts 10 von der Trägerstruktur 22 kann durch ziehendes Angreifen an den Rastlaschen 78, 80 die Rastwirkung der Rastmittel 72 aufgehoben werden, so dass das Heizgerät 10 mit seinen Trägerplatten 36, 38 entgegengesetzt zur Einschieberichtung E aus dem Aufnahmeraum 30 herausgezogen und somit von der Trägerstruktur 22 entfernt werden kann.

Um auch in einer Richtung orthogonal zu den Träger-Gehäusewänden 26, 28 eine stabile Halterung des Heizgeräts 10 an der Trägerstruktur 22 zu gewährleisten, ist deren Abstand auf die Positionierung der am Heizgerät 10 angebrachten Trägerelemente 36, 38 so abgestimmt, dass die Trägerelemente 36, 38 in den diesen jeweils zugeordneten Trägerelement-Aufnahmen 48, 50 im Wesentlichen ohne Bewegungsspiel orthogonal zu den Träger-Gehäusewänden 26, 28 aufgenommen werden. Auf diese Art und Weise ist gleichzeitig auch eine definierte und stabile Positionierung der durch die jeweiligen Anbringungszapfen 46 am Heizgerät 10 angebrachten Trägerelemente 36, 38 bezüglich des Heizgeräts 10 selbst gewährleistet, ohne dass eine beispielsweise durch Verschraubung erzeugte Fixierung der Trägerelemente 36, 38 am Heizgerät 10 erforderlich ist. Allein die Anlage der Trägerelemente 36, 38 an den den jeweiligen Träger-Gehäusewänden 26, 28 zugewandten Seiten 86, 88 des Heizgeräts 10 ist für eine stabile und spielfreie Tragewechselwirkung ausreichend.

Es ist darauf hinzuweisen, dass die Prinzipien der vorliegenden Erfindung auch Anwendung finden können, wenn die Rastmittel 72 beispielsweise nur einen oder auch mehr als zwei Rastvorsprünge und zugeordnete Rastausnehmungen aufweisen. Die Trägerstruktur 22 kann so ausgebildet sein, dass an einer in der Darstellung der Fig. 2 nicht erkennbaren und die beiden Träger-Gehäusewände 26, 28 verbindenden Gehäusewand eine Durchgriffsöffnung vorgesehen ist, um beispielsweise die für eine elektrische Anbindung erforderliche Verkabelung an das Heizgerät 10 heranführen zu können bzw. eine Brennstoffzuführleitung und einen Abgasauslass anschließen zu können.

## Patentansprüche

1. Heizgeräteträgeranordnung zur Anbringung eines Heizgeräts an einem Fahrzeug, umfassend eine an einem Fahrzeug anzubringende Trägerstruktur (22), wobei die Trägerstruktur (22) ein Trägergehäuse (24) mit zwei einander gegenüberliegenden Träger-Gehäusewänden (26, 28) umfasst, und Fixiermittel (70), **gekennzeichnet durch** wenigstens ein an einem Heizgerät (10) anzubringendes Trägerelement (36, 38), wobei an der Trägerstruktur (22) in Zuordnung zu jedem an dem Heizgerät (10) anzubringenden Trägerelement (36, 38) eine Trägerelementen-Aufnahme (48, 50) zur Aufnahme eines an dem Heizgerät (10) angebrachten Trägerelements (36, 38) vorgesehen ist, wobei an jeder der Träger-Gehäusewände (26, 28) eine Trägerelementen-Aufnahme (48, 50) vorgesehen ist, und wobei die Fixiermittel (70) zur Fixierung jedes in einer Trägerelementen-Aufnahme (48, 50) aufgenommenen Trägerelements (36, 38) bezüglich der Trägerstruktur (22) vorgesehen sind.

2. Heizgeräteträgeranordnung nach Anspruch 1, **dadurch gekennzeichnet, dass** wenigstens eine, vorzugsweise jede in Zuordnung zu einem an dem Heizgerät (10) angebrachten Trägerelement (36, 38) vorgesehene Trägerelementen-Aufnahme (48, 50) eine Schiebeaufnahme (52) zum Einschieben des in dieser Trägerelementen-Aufnahme (48, 50) aufzunehmenden Trägerelements (36, 38) in einer Einschieberichtung (E) umfasst.

3. Heizgeräteträgeranordnung nach Anspruch 2, **dadurch gekennzeichnet, dass** die Schiebeaufnahme (52) an zwei quer zur Einschieberichtung (E) einander gegenüberliegenden Schiebeaufnahme-Randbereichen Hinterschneidungsbereiche (54, 56) umfasst, und dass das in der Schiebeaufnahme (52) aufzunehmende Trägerelement (36, 38) in Zuordnung zu jedem Hinterschneidungsbereich (54, 56) einen Hinterschneidungs-Eingriffsbereich (60, 62) umfasst, wobei bei in die Schiebeaufnahme (52) eingeschobenem Trägerelement (36, 38) jeder Hinterschneidungs-Eingriffsbereich (60, 62) von einem zugeordneten Hinterschneidungsbereich (54, 56) übergriffen ist.

4. Heizgeräteträgeranordnung nach einem der vorangehenden Ansprüche,
**dadurch gekennzeichnet, dass** die Fixiermittel (70) Rastmittel (72) umfassen.

5. Heizgeräteträgeranordnung nach Anspruch 2 und Anspruch 4, **dadurch gekennzeichnet, dass** bei Einschieben des Trägerelements (36, 38) in die Schiebeaufnahme (52) in der Einschieberichtung (E) die Rastmittel (72) bei Erreichen einer Rast-Einschiebeposition des Trägerelements (36, 38) bezüglich der Trägerstruktur (22) in einen Verrastungszustand kommen.

6. Heizgeräteträgeranordnung nach Anspruch 4 oder 5, **dadurch gekennzeichnet, dass** die Rastmittel (72) an jedem in einer Trägerelementen-Aufnahme (48, 50) der Trägerstruktur (22) aufzunehmenden Trägerelement (36, 38) oder an der Raststruktur (22) wenigstens einen, vorzugsweise eine Mehrzahl von Rastvorsprüngen (74, 76) umfassen und an der Trägerstruktur (22) oder jedem in einer Trägerelementen-Aufnahme (48, 50) der Trägerstruktur (22) aufzunehmenden Trägerelement (36, 38) in Zuordnung zu jedem Rastvorsprung (74, 76) eine Rastaufnahme (82, 84) umfassen.

7. Heizgeräteträgeranordnung nach Anspruch 6, **dadurch gekennzeichnet, dass** der wenigstens eine Rastvorsprung (74, 76) am Trägerelement (36, 38) vorgesehen ist und die in Zuordnung zu dem wenigstens einen Rastvorsprung (74, 76) vorgesehene Rastaufnahme (82, 84) an der Trägerstruktur (22) vorgesehen ist.

8. Heizgeräteträgeranordnung nach Anspruch 2 und Anspruch 7, **dadurch gekennzeichnet, dass** die in Zuordnung zu dem wenigstens einen Rastvorsprung (74, 76) vorgesehene Rastaufnahme (82, 84) an der Trägerstruktur (22) im Bereich eines Einführöffnungsbereichs (58) der Schiebeaufnahme (52) vorgesehen ist.

9. Heizgeräteträgeranordnung nach Anspruch 2 und einem der Ansprüche 6-8, **dadurch gekennzeichnet, dass** an wenigstens einem, vorzugsweise jedem Trägerelement (36, 38) eine Mehrzahl von Rastvorsprüngen (74, 76) mit gegenseitigem Abstand quer zur Einschieberichtung (E) vorgesehen ist.

10. Heizgeräteträgeranordnung nach einem der vorangehenden Ansprüche, **dadurch gekennzeichnet, dass** das Trägergehäuse (24) aus Kunststoffmaterial aufgebaut ist.

11. Heizgeräteträgeranordnung nach einem der vorangehenden Ansprüche, **dadurch gekennzeichnet, dass** wenigstens ein, vorzugsweise jedes Trägerelement (36, 38) wenigstens einen Anbringungsbereich (40, 42, 44) zur Anbringung des Trägerelements (36, 38) an einem Heizgerät (10) umfasst, oder/und dass wenigstens ein, vorzugsweise jedes Trägerelement (36, 38) plattenartig ausgebildet ist, oder/und dass wenigstens ein, vorzugsweise jedes Trägerelement (36, 38) aus Kunststoffmaterial aufgebaut ist.

12. Heizgeräteträgeranordnung nach Anspruch 11, **dadurch gekennzeichnet, dass** wenigstens ein, vorzugsweise jeder Anbringungsbereich (40, 42, 44) einen in einer Anbringungsöffnung am Heizgerät (10) aufzunehmenden Anbringungszapfen (46) umfasst.

13. Heizgerätebaugruppe, umfassend ein Heizgerät (10) und eine Heizgeräteträgeranordnung (20) nach einem der vorangehenden Ansprüche.

14. Heizgerätebaugruppe nach Anspruch 13, **dadurch gekennzeichnet, dass** an jeder einer der Träger-Gehäusewände (26, 28) gegenüberliegend zu positionierenden Seite (86, 88) des Heizgeräts (10) ein Trägerelement (36, 38) angebracht ist.

## Claims

1. Heating device support arrangement for mounting a heating device on a vehicle, comprising a support structure (22) to be mounted on a vehicle, wherein said support structure (22) includes a support housing (24) having two opposing support housing walls (26, 28), and fixing means (70), **characterized by** at least one support element (36, 38) to be mounted on a heating device (10),
wherein a support element reception (48, 50) for receiving a support element (36, 38) mounted on the heating device (10) is provided on the support structure (22) in association with each support element (36, 38) to be mounted on the heating device (10), wherein a support element reception (48, 50) is provided on each of the support housing walls (26, 28), and wherein the fixing means (70) are provided for fixing each support element (36, 38) received in a support element reception (48, 50) with respect to the support structure (22).

2. Heating device support arrangement according to claim 1, **characterized in that** at least one, preferably each, support element reception (48, 50) provided in association with a support element (36, 38) mounted on the heating device (10) comprises a sliding reception (52) for inserting the support element (36, 38) to be received in this support element reception (48, 50) by sliding in an insertion direction (E).

3. Heating device support arrangement according to claim 2, **characterized in that** the sliding reception (52) comprises undercut regions (54, 56) at two sliding reception edge regions lying transversely opposite one another with respect to the insertion direction (E), and **in that** the support element (36, 38) to be accommodated in the sliding reception (52) is arranged in association with each undercut region (54, 56), wherein each undercut engagement region (60, 62) is overlapped by an associated undercut region (54, 56) when the support element (36, 38) is inserted into the sliding reception (52) by sliding.

4. Heating device support arrangement according to any one of the preceding claims, **characterised in that** the fixing means (70) comprises latching means (72).

5. Heating device support arrangement according to claim 2 and claim 4, **characterized in that**, when the support element (36, 38) is pushed into the sliding reception (52) in the insertion direction (E), the latching means (72) come into a latching state when a latching insertion position of the support element (36, 38) with respect to the support structure (22) is reached.

6. Heating device support arrangement according to claim 4 or 5, **characterized in that** the latching means (72) comprise at least one latching projection (74, 76), preferably a plurality of latching projections (74, 76), on each support element (36, 38) to be received in a support element reception (48, 50) of the support structure (22) or on the latching structure (22), and comprise a latching reception (82, 84) on the support structure (22) or on each support element (36, 38) to be received in a support element reception (48, 50) of the support structure (22) in association with each latching projection (74, 76).

7. Heating device support arrangement according to claim 6, **characterised in that** the at least one latching projection (74, 76) is provided on the support element (36, 38) and the latching reception (82, 84) provided in association with the at least one latching projection (74, 76) is provided on the support structure (22).

8. Heating device support arrangement according to claim 2 and claim 7, **characterised in that** the latching reception (82, 84) provided in association with the at least one latching projection (74, 76) is provided on the support structure (22) in the region of an insertion opening region (58) of the sliding reception (52).

9. Heating device support arrangement according to claim 2 and one of claims 6 to 8, **characterized in that** a plurality of latching projections (74, 76) is provided on at least one, preferably each, support element (36, 38) with mutual spacing transversely to the insertion direction (E).

10. Heating device support arrangement according to any one of the preceding claims, **characterized in that** the support housing (24) is constructed of plastic material.

11. Heating device support arrangement according to one of the preceding claims, **characterized in that** at least one, preferably each, support element (36, 38) comprises at least one attachment area (40, 42, 44) for attaching the support element (36, 38) to a heating device (10), and/or **in that** at least one, preferably each, support element (36, 38) is of plate-like construction, and/or **in that** at least one, preferably each, support element (36, 38) is constructed from plastic material.

12. Heating device support arrangement according to claim 11, **characterized in that** at least one, preferably each, attachment area (40, 42, 44) comprises an attachment pin (46) to be received in an attachment opening on the heating device (10).

13. Heating device module comprising a heating device (10) and a heating device support arrangement (20) according to any one of the preceding claims.

14. Heating device module according to claim 13, **characterized in that** a support element (36, 38) is mounted to each side (86, 88) of the heating device (10) to be positioned opposite one of the support housing walls (26, 28).

## Revendications

1. Agencement de support d'appareil de chauffage pour le montage d'un appareil de chauffage sur un véhicule, comprenant une structure de support (22) à monter sur un véhicule, dans lequel la structure de support (22) comprend un boîtier de support (24) avec deux parois de boîtier de support (26, 28) opposées l'une à l'autre, et des moyens de fixation (70), **caractérisé par** au moins un élément de support (36, 38) à monter sur un appareil de chauffage (10), dans lequel sur la structure de support (22), en association avec chaque élément de support (36, 38) à monter à l'appareil de chauffage, un logement d'élément de support (48, 50) est prévu pour recevoir un élément de support (36, 38) monté sur l'appareil de chauffage (10), dans lequel un logement d'élément de support (48, 50) est prévu sur chacune des parois de boîtier de support (26, 28), et dans lequel les moyens de fixation (70) sont prévus pour fixer chaque élément de support (36, 38) reçu dans un logement d'élément de support (48, 50) par rapport à la structure de support (22).

2. Agencement de support d'appareil de chauffage selon la revendication 1, **caractérisé en ce qu'**au moins un, de préférence chaque, logement d'élément de support (48, 50) prévu en association avec un élément de support (36, 38) monté sur l'appareil de chauffage (10) comprend un logement coulissant (52) pour l'insertion par coulissement de l'élément de support (36, 38) à recevoir dans ce logement d'élément de support (48, 50) dans une direction d'insertion (E).

3. Agencement de support d'appareil de chauffage selon la revendication 2, **caractérisé en ce que** le logement coulissant (52) comprend des zones de contre-dépouille (54, 56) sur deux zones de bord de logement coulissant opposées transversalement à la direction d'insertion (E), et **en ce que** l'élément de support (36, 38) à loger dans le logement coulissant (52) comprend, en association avec chaque zone de contre-dépouille (54, 56), une zone de prise de contre-dépouille (60, 62), dans lequel chaque zone de prise de contre-dépouille (60, 62) est recouverte par une zone de contre-dépouille (54, 56) associée lorsque l'élément de support (36, 38) est inséré par coulissement dans le logement coulissant (52).

4. Agencement de support d'appareil de chauffage selon l'une quelconque des revendications précédentes, **caractérisé en ce que** les moyens de fixation (70) comprennent des moyens d'encliquetage (72).

5. Agencement de support d'appareil de chauffage selon la revendication 2 et la revendication 4, **caractérisé en ce que**, lors de l'insertion par coulissement de l'élément de support (36, 38) dans le logement coulissant (52) dans la direction d'insertion (E), les moyens d'encliquetage (72) viennent dans un état d'encliquetage lorsque l'élément de support (36, 38) atteint une position d'insertion par encliquetage par rapport à la structure de support (22).

6. Agencement de support d'appareil de chauffage selon la revendication 4 ou 5, **caractérisé en ce que** les moyens d'encliquetage (72) comprennent, sur chaque élément de support (36, 38) à recevoir dans un logement d'élément de support (48, 50) de la structure de support (22) ou sur la structure d'encliquetage (22), au moins une, de préférence une pluralité de saillies d'encliquetage (74, 76) et comprennent sur la structure de support (22) ou sur chaque élément de support (36, 38) à recevoir dans un logement d'élément de support (48, 50) de la structure de support (22) un logement d'encliquetage (82, 84) en association avec chaque saillie d'encliquetage (74, 76).

7. Agencement de support d'appareil de chauffage selon la revendication 6, **caractérisé en ce que** ladite au moins une saillie d'encliquetage (74, 76) est prévue sur l'élément support (36, 38) et le logement d'encliquetage (82, 84) prévu en association avec ladite au moins une saillie d'encliquetage (74, 76) est prévu sur la structure de support (22).

8. Agencement de support d'appareil de chauffage selon la revendication 2 et la revendication 7, **caractérisé en ce que** le logement d'encliquetage (82, 84) prévu en association avec ladite au moins une saillie d'encliquetage (74, 76) est prévu sur la structure de support (22) dans la zone d'une zone d'ouverture d'introduction (58) du logement coulissant (52).

9. Agencement de support d'appareil de chauffage selon la revendication 2 et l'une des revendications 6 à 8, **caractérisé en ce qu'**il est prévu sur au moins un, de préférence chaque élément de support (36, 38), une pluralité de saillies d'encliquetage (74, 76) avec un écartement mutuel transversalement à la direction d'insertion (E).

10. Agencement de support d'appareil de chauffage selon l'une des revendications précédentes, **caractérisé en ce que** le boîtier de support (24) est construit en matière plastique.

11. Agencement de support d'appareil de chauffage selon l'une des revendications précédentes, **caractérisé en ce qu'**au moins un, de préférence chaque élément de support (36, 38) comprend au moins une zone de fixation (40, 42, 44) pour la fixation de l'élément de support (36, 38) sur un appareil de chauffage (10), ou/et **en ce qu'**au moins un, de préférence chaque élément de support (36, 38) est réalisé en forme de plaque, ou/et **en ce qu'**au moins un, de préférence chaque élément de support (36, 38) est construit en matière plastique.

12. Agencement de support d'appareil de chauffage selon la revendication 11, **caractérisé en ce qu'**au moins une, de préférence chaque zone de fixation (40, 42, 44) comprend un tenon de fixation (46) à recevoir dans une ouverture de fixation sur l'appareil de chauffage (10).

13. Module d'appareil de chauffage comprenant un appareil de chauffage (10) et un agencement de support d'appareil de chauffage (20) selon l'une quelconque des revendications précédentes.

14. Module d'appareil de chauffage selon la revendication 13, **caractérisé en ce qu'**un élément de support (36, 38) est monté sur chaque côté (86, 88) de l'appareil de chauffage (10) devant être positionné en face de l'une des parois de boîtier de support (26, 28).
